# EUROPÄISCHE PATENTSCHRIFT

(11) **EP 2 591 245 B1**
(45) Veröffentlichungstag und Bekanntmachung des Hinweises auf die Patenterteilung: **05.09.2018**
(21) Anmeldenummer: 11779564.1
(22) Anmeldetag: 02.07.2011
(51) Int. Cl.: F16D 3/223

(54) **GELENK**
JOINT
ARTICULATION

(30) Priorität: 10.07.2010 DE 102010026709
(43) Veröffentlichungstag der Anmeldung: 15.05.2013
(73) Patentinhaber: Neumayer Tekfor Engineering GmbH, 77756 Hausach (DE)
(72) Erfinder: SZENTIMHÁLYI, Volker, 77793 Gutach (DE); ROSER, Tobias, 77948 Friesenheim (DE); LEHMANN, Martin, 78132 Hornberg (DE)
(86) Internationale Anmeldenummer: PCT/DE2011/001400
(87) Internationale Veröffentlichungsnummer: WO 2012/010142

(56) Entgegenhaltungen:
- WO-A1-02/02960
- WO-A1-88/09445
- WO-A1-2008/003303
- DE-A1- 4 410 298
- GB-A- 962 455
- US-A- 4 611 373

## Beschreibung

Die Erfindung bezieht sich auf ein Gelenk gemäß dem Oberbegriff des Patentanspruchs 1. Insbesondere handelt es sich um ein Verschiebegelenk für Kraftfahrzeuge.

Im Stand der Technik sind Gegenbahngelenke in verschiedenen Ausführungsformen bekannt, z.B. beschrieben in den Offenlegungsschriften DE 10 2005 042 909 A1 oder DE 10 209 933 A1. So zeigen auch die Patentschriften GB 962,455 A oder US 4,611,373 A, die Offenlegungsschrift DE 44 10 298 A1 und die Druckschriften WO 88/09445 A1, WO 02/02960 A1 und WO 2008/003303 A1 unterschiedliche Ausführungen. Einige Gelenke sind als sogenannte Festgelenke ausgeführt. Dies bedeutet, dass - bis auf kleine Axialspiele - kein axialer Verschiebeweg vorgesehen ist, sondern vielmehr eine feste axiale Lage des Gelenkbeugepunktes gegeben ist. Einige der bekannten Bauformen besitzen den Vorteil, dass sie bezüglich ihrer Kugellaufbahnen vollständig umformtechnisch und somit preisgünstig hergestellt werden können. Weiterhin sind im Stand der Technik verschiedene Ausführungen von axial verschiebbaren, sogenannten Verschiebegelenken bekannt - z.B. DE 10 237 169 A1 -, bei denen neben der Beugung ein axialer Längenausgleich möglich ist. Die meisten bekannten Bauformen solcher Verschiebegelenke müssen auf Grund ihrer Bahngeometrie spanend hergestellt werden. Die bekannten Bauformen, die eine umformtechnische Herstellung erlauben, sind oft lediglich für kleine Winkel geeignet. Sie haben zumeist den Nachteil, dass der Käfig nicht gesteuert wird und somit in ungewollte axiale Positionen (z.B. am Bahnende) wandern kann.

Bei Kugelgelenken findet die Übertragung des Drehmomentes über die Kugeln - auch allgemein bezeichnet als Rollkörper - zwischen den Gelenkbestandteilen Innen- und Außennabe statt. Um die Effektivität zu steigern, ist es daher vorteilhaft, auch das übertragbare Drehmoment zu erhöhen. Gleichzeitig wird jedoch angestrebt, die Größe der Gelenke möglichst nicht zu verändern, um somit den Bauraum im Fahrzeug wie auch andere mit dem Gelenk in Verbindung stehende Bauteile, z.B. Abdichtungen oder Befestigungselemente, beibehalten zu können. Angestrebt ist somit, speziell nur den für die Übertragung des Drehmoments relevanten Teil des Gelenks für ein höheres Drehmoment zu optimieren.

Der Erfindung liegt die Aufgabe zugrunde, ein Gelenk vorzuschlagen, welches die Übertragung eines höheren Drehmoments erlaubt, dessen Raumbedarf sich jedoch kaum oder nicht ändert gegenüber einem Gelenk des Standes der Technik mit einem geringen übertragbaren Drehmoment.

Die Aufgabe wird erfindungsgemäß durch die Merkmale des Patentanspruchs 1 gelöst. Besonders vorteilhaft ist es, wenn das Anbindungs-Festigkeits-Verhältnis AFV größer oder gleich 4 Quadratmillimeter ist. Als Obergrenze für das Anbindungs-Festigkeits-Verhältnis AFV mit einer gesteigerten Festigkeit kann auch der Wert 5 Quadratmillimeter verwendet werden.

Durch diese Nut - als ergänzende Vertiefung der Kugelbahnen - ist es möglich, größere Kugeln zu verwenden, die zwar ggf. eine Modifizierung der Kugelbahnen erforderlich machen, die jedoch nicht mit einer Änderung der restlichen Geometrie einhergehen. So ist es z.B. nicht erforderlich, eine Außennabe mit einem größeren Außendurchmesser zu verwenden, welche eigentlich mit größeren Kugeln einhergehen würde. Die Erfindung erlaubt es somit, ein Gelenk für ein größeres Drehmoment zu dimensionieren, ohne dass sich an der Geometrie des Gelenks nach außen hin etwas ändert. Für die Übertragung des Drehmoments ist dabei der Durchmesser der Kugeln wesentlich. Bei dem Gelenk handelt es sich in einer Ausgestaltung insbesondere um ein Verschiebegelenk. Die Nut erlaubt es insbesondere, größere Kugeln als im Stand der Technik zu montieren und somit für die Übertragung des Drehmoments zu verwenden.

Die Nut mündet mit dem Abschluss der Innennabe. Das dem der Außennabe zugewandte Ende der Innennabe ist auch das Ende, welches in die Außennabe eingeführt ist.

Die Abnahme der Tiefe der Nut erfolgt nicht abrupt, sondern beispielsweise stetig.

Indem die Nuten derartig ausgestaltet sind, dass mindestens in einem Zustand des Verkippens von Innennabe und Außennabe zueinander der Abstand zwischen dem Bahngrund einer Nut und dem Bahngrund der zugeordneten äußeren Kugelbahn größer oder gleich dem Durchmesser einer Kugel ist, gibt es somit zumindest eine Stellung zwischen Innen- und Außennabe, welche Platz für eine Kugel bietet und somit auch die Montage des Gelenks erlaubt.

Eine Ausgestaltung beinhaltet, dass die Anzahl der inneren Kugelbahnen ein ganzzahliges Vielfaches von vier ist. Vorzugsweise sind dabei die Kugelbahnen gleichmäßig um die Längsachse der Innennabe herum verteilt. Alternativ bzw. ergänzend ist die Anzahl der Kugelbahnen ein ganzzahliges Vielfaches von zwei.

Die Kugeln haben beispielweise einen Durchmesser von 15 mm.

Eine Ausgestaltung beinhaltet, dass die inneren Kugelbahnen derartig ausgestaltet sind, dass sie im Querschnitt im Wesentlichen die Form von Kreissegmenten oder Ellipsensegmenten mit einem Durchmesser zwischen 7,0 und 8,5 mm aufweisen. Dabei können Kreissegmente mit unterschiedlichen Durchmesserwerten miteinander kombiniert werden, so dass sich insgesamt der für die Kugeln erforderliche gesamte Durchmesser ergibt. Der Durchmesser des gesamten Querschnitts beträgt beispielweise 16 mm.

Ein Außendurchmesser der Außennabe ist beispielsweise 80 mm. In einer Ausgestaltung liegt der Außendurchmesser zwischen ungefähr 75 und 85 mm.

Die Erfindung wird anhand einiger in den Figuren dargestellter Ausführungsbeispiele näher erläutert. Dabei zeigen:
Fign. 1 und 1a: einen Schnitt durch ein Gelenk gemäß dem Stand der Technik,
Fig. 2: einen Schnitt durch ein erfindungsgemäßes Gelenk,
Fig. 3: eine Draufsicht auf das Gelenk der Fig. 2, und
Fig. 4: einen Schnitt durch das Gelenk der Fig. 2 im Zustand des Zusammenbaus.

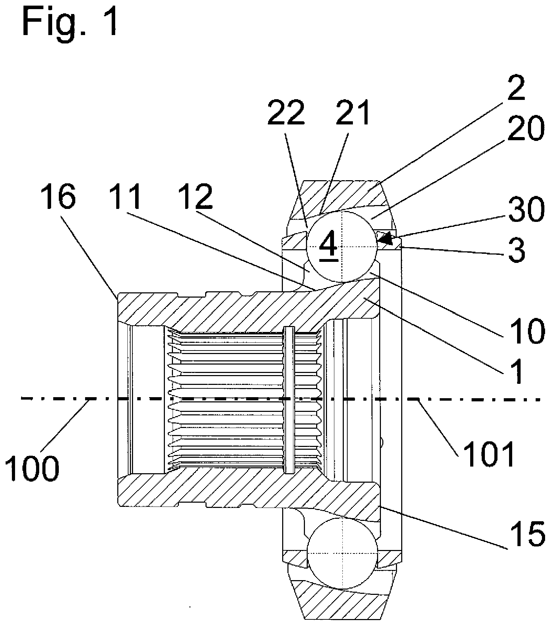

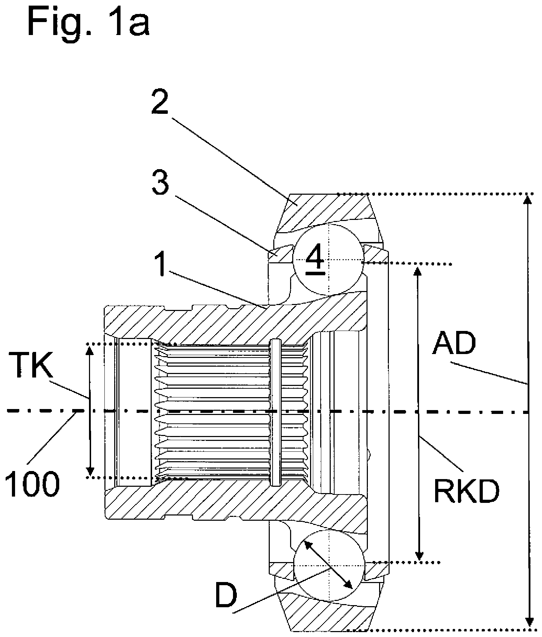

Die Fig. 1 zeigt ein Gelenk gemäß dem Stand der Technik mit einer Innennabe 1 und einer Außennabe 2. Ein Drehmoment wird zwischen den Naben 1, 2 durch Kugeln 4 übertragen. Die Kugeln 4 sind zwischen den inneren Kugelbahnen 10 der Innennabe 1 und den äußeren Kugelbahnen 20 der Außennabe 2 angeordnet. Um ein Verklemmen zu verhindern, werden die Kugeln 4 durch einen Käfig 3, in dessen Fenstern 30 die Kugeln 4 sich befinden, in einer Ebene gehalten. Die inneren Kugelbahnen 10 haben im Querschnitt die Form eines Halbkreises oder einer halben Ellipse mit einem Bahngrund 11 und seitlich daran anschließenden Bahnflanken 12. Entsprechendes gilt für die äußeren Kugelbahnen 20 mit deren Bahngrund 21 und den zwei Bahnflanken 22. Jeweils eine innere Kugelbahn 10 und eine äußere Kugelbahn 20 sind paarweise einander zugeordnet und führen hier jeweils eine Kugel 4. Im vorliegenden Beispiel ist die Anzahl der Paare an inneren 10 und äußeren Kugelbahnen 20 ein ganzzahliges Vielfaches von vier, wobei die inneren Kugelbahnen 10 jeweils gleichmäßig um die Längsachse 100 der Innennabe 1 herum angeordnet sind. Dies bringt es mit sich, dass sich jeweils zwei innere Kugelbahnen 10 spiegelbildlich in einer Ebene durch die Längsachse 100 der Innennabe 1 einander gegenüberliegen. Die Innennabe 1 weist ein Ende 15 auf, welches der Außennabe 2 zugewandt ist, und ein von der Außennabe 2 abgewandtes Ende 16, welches insbesondere den schaftartigen Abschnitt der Innennabe 1 abschließt. Das dargestellte Gelenk ist im gestreckten Zustand gezeigt, so dass die Längsachse 100 der Innennabe 1 und die Längsachse 101 der Außennabe 2 zusammenfallen. Der Durchmesser der Kugeln liegt in diesem Beispiel mit 13 mm in einem Bereich zwischen 12 und 14 mm und der Außendurchmesser der Außennabe beträgt 80 mm, wobei eine Spanne zwischen 70 und 90 mm im Stand der Technik üblich ist. Der Schaft der Innennabe 1 hat einen Außendurchmesser von 39,5 mm, wobei Werte zwischen 35 und 45 mm im Stand der Technik üblich sind.

Die Fig. 1a zeigt den gleichen Schnitt wie Fig. 1. Für die Übersichtlichkeit sind jedoch weniger Bezugszeichen eingetragen und dafür einige Kenngrößen des Gelenks. Bei den Kenngrößen handelt es sich um folgende Werte: Der Teilkreisdurchmesser der Innenverzahnung der Innennabe 1 vorzugsweise zur Anbindung über einen entsprechenden Zapfen an eine Welle: TK; der Außendurchmesser des Gelenks, gegeben durch die Außennabe 2: AD; der sich zumindest aus der Ausgestaltung der Innennabe 1 ergebende Rollkreisdurchmesser: RKD und der Kugeldurchmesser der Kugeln: D. Eine weitere relevante Größe ist noch die Anzahl der Kugeln 4: Z. Alle Messgrößen sind dabei insbesondere in Millimeter angegeben. Die Übertragungsfähigkeit des Gelenks ist gegeben durch die Geometrische Tragzahl (GT), dessen Wert sich ergibt durch: GT = RKD * D * D * Z. Dieser Wert sollte bei der Konstruktion eines Gelenks möglichst maximiert werden. Die Anzahl der Kugeln Z liegt meist zwischen 6 und 12 und hat insbesondere den Wert 8. Die Kugeln 4 haben zumeist Durchmesser zwischen 1200 mm und 4800 mm. Im Stand der Technik liegt der Wert GT/AD meist unterhalb von 1000 Quadratmillimeter. Begrenzend für die Maximierung ist, dass zumeist äußere Abmessungen z.B. durch den Einbaubereich für das Gelenk vorgegeben und einzuhalten sind. Somit kann beispielsweise der Außendurchmesser AD fest vorgegeben sein. Weiterhin muss auch eine ausreichende Wandstärke für die Einzelteile des Gelenks gegeben sein. Dabei zeigt sich, dass eine wesentliche Optimierungsgröße für Gelenke durch das Anbindungs-Festigkeits-Verhältnis AFV gegeben ist: AFV = (GT * TK) /(100 * AD * AD). Oder entsprechend mit der obigen Formel für GT: AFV = (RKD * D * D * Z * TK) /(100 * AD * AD). Die optimale Gelenkdimensionierung ergibt sich dabei für AFV-Werte zwischen 3,50 und 5,50 Quadratmillimeter oder noch besser zwischen 4 und 5 Quadratmillimeter. Dabei liegt GT/AD vorzugsweise zwischen 1000 und 1300 Quadratmillimeter. Sind z.B. die Werte für den Kugeldurchmesser D und den Außendurchmesser AD fest vorgegeben, so gilt es, das Optimum im Verhältnis zwischen Rollkreisdurchmesser RKD und Teilkreisdurchmesser der Verzahnung TK zu finden.

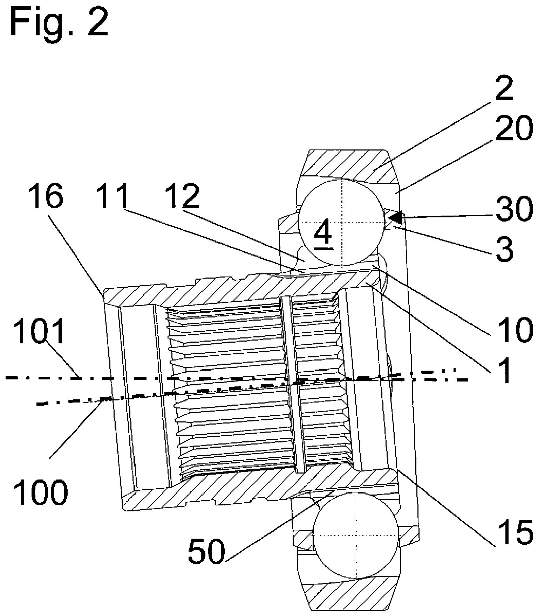

Die Fig. 2 zeigt ein erfindungsgemäßes Gelenk, bei welchem die Kugeln 4 einen vergrößerten Durchmesser von 15 mm - möglicher Bereich: 14 bis 16 mm - aufweisen und somit auch ein um ungefähr 35% größeres Drehmoment übertragen können. Möglich sind hierbei Werte zwischen 20 und 40%. Der Außendurchmesser der Außennabe 2 liegt jedoch unverändert bei 80 mm und auch der Schaft der Innennabe hat noch die gleiche Größe wie beim Gelenk der Fig. 1. Die größeren Kugeln 4 führen dazu, dass die Kugelbahnen eine größere Breite und Tiefe als in der Fig. 1 erhalten, von Werten zwischen 6,5 und 7,5 mm auf Werte zwischen 7,5 und 8,5 mm. Dadurch nimmt die Hertz'sche Pressung ab oder das übertragbare Moment kann erhöht werden. Im jeweiligen Bahngrund 11 der inneren Kugelbahnen 10 ist jeweils eine Nut 50 vorgesehen, welche den Bahngrund 11 längs der Längsachse 100 in einem schmalen Bereich mit einer zusätzlichen Vertiefung versieht. Die Nuten 50 haben dabei im fertig montierten Gelenk keine Aufgaben, da die Kugeln 4 sich entlang den Bahnflanken 12 der inneren Kugelbahnen 10 bewegen und somit keinen Kontakt mit dem Bahngrund 11 bzw. insbesondere nicht mit den Nuten 50 haben. Sie dienen lediglich der Montage des Gelenks. Die Nuten 50 münden mit ihrer maximalen Tiefe am der Außennabe 2 zugewandten Ende 16 der Innennabe 1 und haben in der Richtung des von der Außennabe 2 abgewandten Endes 16 einen Auslauf, in welchem die Tiefe kontinuierlich abnimmt. Das Gelenk ist hier mit einer 5°-Beugung dargestellt.

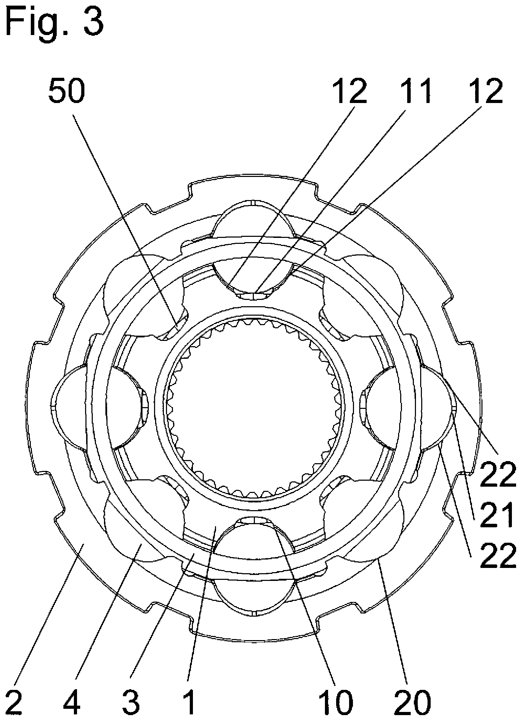

Die Fig. 3 zeigt eine Draufsicht auf das erfindungsgemäße Gelenk der Fig. 1, wobei die Vertiefungen der Nuten 50 in den Bahngründen 11 der inneren Kugelbahnen 10 zu erkennen sind.

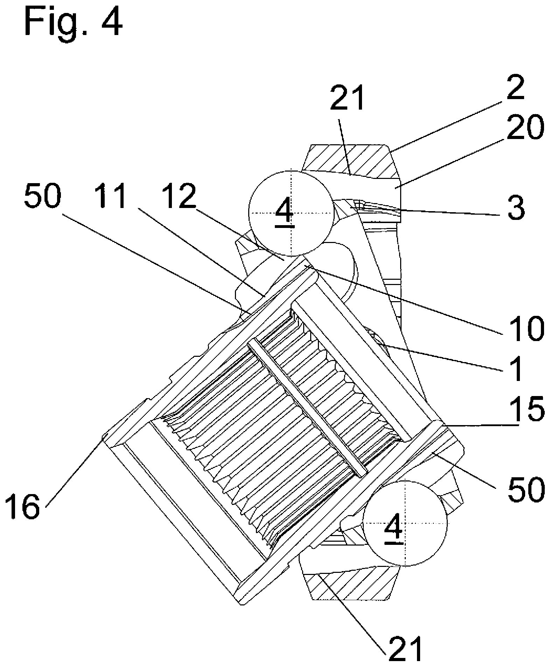

Die Fig. 4 zeigt einen Moment während der Montage eines erfindungsgemäßen Gelenks. Zu erkennen ist, dass die Nuten 50 eine solche Tiefe aufweisen, dass sie das Einbringen der Kugeln 4 während eines Verschwenkens der Innennabe 1 relativ zur Außennabe 2 erlauben. Die Tiefe und der Verlauf der Nuten 50 sind hier anhand zweier Nuten 50 zu erkennen, die sich in einer Ebene einander spiegelbildlich gegenüberliegen. Eine - hier zeichnerisch oben dargestellte - Kugel 4 befindet sich zwischen dem der Außennabe 2 zugewandten Ende 15 der Innennabe 1 und somit im Bereich des dort befindlichen Endes der Nut 50 und einem Bahngrund 21 einer äußeren Kugelbahn 20 der Außennabe 2. Die andere - hier unten befindliche - Kugel 4 befindet sich zwischen dem Bahngrund 21 einer anderen äußeren Kugelbahn 20 der Außennabe 2 und dem anderen Ende 16 einer Nut 50.

## Patentansprüche

1. Gelenk,
mit einer Innennabe (1), welche eine Längsachse (100) und innere (10) Kugelbahnen aufweist,
wobei die inneren Kugelbahnen (10) einen Bahngrund (11) und seitlich daran anschließende Bahnflanken (12) aufweisen,
mit einer Außennabe (2), welche eine Längsachse und äußere Kugelbahnen (20) aufweist,
wobei die äußeren Kugelbahnen (20) einen Bahngrund (21) und seitlich daran anschließende Bahnflanken (22) aufweisen,
wobei die Innennabe (1) ein der Außennabe zugewandtes Ende (15) und ein von der Außennabe (2) abgewandtes Ende (16) aufweist,
wobei in dem Bahngrund (11) der inneren Kugelbahnen (10) jeweils eine längs der Längsachse (100) der Innennabe (1) verlaufende Nut (50) vorgesehen ist,
wobei die Nuten (50) jeweils bis zu dem der Außennabe (2) zugewandten Ende (15) der Innennabe (1) reichen und mindestens so lang wie die jeweils zugeordnete äußere Kugelbahn (20) sind,
wobei die inneren Kugelbahnen (10) und die äußeren Kugelbahnen (20) jeweils paarweise einander zugeordnet sind,
mit einem Käfig (3), welcher umfangsverteilte Fenster (30) aufweist und welcher zwischen der Innennabe (1) und der Außennabe (2) angeordnet ist, und
mit Kugeln (4), welche in den Fenstern (30) des Käfigs (3) und in den Paaren der inneren Kugelbahnen (10) und der äußeren Kugelbahnen (20) angeordnet sind und welche der Käfig (4) in einer Ebene hält,
wobei die Innennabe (1) eine Innenverzahnung mit einem Teilkreisdurchmesser TK aufweist,
wobei die Außennabe (2) einen Außendurchmesser AD aufweist,
wobei eine vorgegebene Anzahl Z Kugeln (4) vorhanden ist,
wobei die Kugeln (4) einen Durchmesser D aufweisen und
wobei sich zumindest durch die Innennabe (1) ein Rollkreisdurchmesser RKD ergibt,
**dadurch gekennzeichnet,**
**dass** alle Messgrößen in Millimeter angegeben sind,
**dass** sich aus den Messgrößen RKD, D und Z eine Geometrische Tragzahl GT über folgende Formel ergibt: GT = RKD * D * D * Z,
**dass** sich aus den Messgrößen GT, TK und AD ein Anbindungs-Festigkeits-Verhältnis AFV über folgende Formel ergibt: AFV = (GT * TK)/(100 * AD * AD),
**dass** das Anbindungs-Festigkeits-Verhältnis AFV zwischen 3,5 Quadratmillimeter und 5,5 Quadratmillimeter liegt,
**dass** die Kugeln (4) einen Durchmesser zwischen ungefähr 14 und 16 mm aufweisen,
**dass** der Außendurchmesser der Außennabe (2) zwischen ungefähr 70 und 90 mm beträgt,
**dass** die Nuten (50) in Richtung des von der Außennabe (2) abgewandten Endes (16) der Innennabe (10) jeweils einen Abschnitt mit einer gleichmäßigen Abnahme der Tiefe aufweisen,
und
**dass** die Nuten (50) derartig ausgestaltet sind, dass in einem Zustand des Verkippens von Innennabe (10) und Außennabe (2) zueinander während einer Montage des Gelenks der Abstand zwischen dem Bahngrund einer Nut (50) und dem Bahngrund (21) der zugeordneten äußeren Kugelbahn (20) größer oder gleich dem Durchmesser einer Kugel (4) ist.

2. Gelenk nach Anspruch 1,
**dadurch gekennzeichnet,**
**dass** die inneren Kugelbahnen (10) derartig ausgestaltet sind, dass sie im Querschnitt im Wesentlichen die Form von Kreissegmenten oder Ellipsensegmenten mit einem Durchmesser zwischen 7,0 und 8,5 mm aufweisen.

## Claims

1. Joint,
with an inner hub (1) which has a longitudinal axis (100) and inner (10) ball tracks,
whereby the inner ball tracks (10) have a track bottom (11) and laterally adjoining track flanks (12),
with an outer hub (2) which has a longitudinal axis and outer ball tracks (20), whereby the outer ball tracks (20) have a track bottom (21) and laterally adjoining track flanks (22),
whereby the inner hub (1) having an end (15) facing the outer hub and an end (16) facing away from the outer hub (2),
whereby a groove (50) extending along the longitudinal axis (100) of the inner hub (1) is provided in each case in the track bottom (11) of the inner ball tracks (10), wherein the grooves (50) each extend to the end (15) of the inner hub (1) facing the outer hub (2) and are at least as long as the respectively associated outer ball track (20),
whereby the inner ball tracks (10) and the outer ball tracks (20) are assigned to each other in pairs,
with a cage (3) which has circumferentially distributed windows (30) and which is arranged between the inner hub (1) and the outer hub (2),
and
with balls (4) which are arranged in the windows (30) of the cage (3) and in the pairs of the inner ball tracks (10) and the outer ball tracks (20) and which the cage (4) holds in one plane,
whereby the inner hub (1) has an internal tooth system with a pitch circle diameter TK,
whereby the outer hub (2) has an outer diameter AD,
whereby a predetermined number Z of balls (4) is present,
whereby the balls (4) having a diameter D and
whereby at least a rolling circle diameter RKD results through the inner hub (1)
**characterized by the fact that**
all measured variables are given in millimeters,
that a basic geometric load rating GT results from the measured variables RKD, D and Z using the following formula: GT = RKD * D * D * Z, that from the measured variables GT, TK and AD a connection strength ratio AFV is obtained using the following formula: AFV = (GT * TK)/(100 * AD * AD), that the connection strength ratio AFV is between 3.5 square millimeters and 5.5 square millimeters,
that the balls (4) have a diameter between about 14 and 16 mm,
that the outer diameter of the outer hub (2) is between approximately 70 and 90 mm,
that the grooves (50) in the direction of the end (16) of the inner hub (10) facing away from the outer hub (2) each have a section with a uniform decrease in depth,
and
that the grooves (50) are designed in such a manner that in a state of tilting of the inner hub (10) and outer hub (2) relative to each other during assembly of the joint, the distance between the track bottom of a groove (50) and the track bottom (21) of the associated outer ball track (20) is greater than or equal to the diameter of a ball (4).

2. Joint according to Claim 1,
**characterized by the fact that**
the inner ball tracks (10) are designed in such a manner that they essentially have the shape of circular segments or elliptical segments with a diameter of between 7.0 and 8.5 mm in cross section.

## Revendications

1. Articulation,
avec un moyeu intérieur (1) qui présente un axe longitudinal (100) et des chemins de roulement à billes intérieurs (10),
les roulements à billes intérieurs (10) comportant une base de chemin (11) avec des flancs de chemin (12) adjacents,
avec un moyeu extérieur (2) qui présente un axe longitudinal et des chemins de roulement à billes extérieurs (20),
les roulements à billes extérieurs (20) comportant une base de chemin (21) avec des flancs de chemin (22) adjacents,
le moyeu intérieur (1) comportant une extrémité (15) orientée vers le moyeu extérieur (2) et une extrémité (16) non tournée vers le moyeu extérieur,
les bases (11) des chemins de roulement intérieurs (10) sont dotées d'une rainure (50) agencée le long de l'axe longitudinal (100) du moyeu intérieur (1), les rainures (50) atteignant l'extrémité (15) du moyeu intérieur (1) orientée vers le moyeu extérieur (2) et ayant une longueur au moins égale au chemin de roulement extérieur associé (20),
les chemins de roulement à billes intérieurs (10) et les chemins de roulement à billes extérieurs (20) étant disposés par paires les uns par rapport aux autres, avec une cage (3) qui présente des fenêtres (30) réparties à la périphérie et disposée entre le moyeu intérieur (1) et le moyeu extérieur (2),
et
avec des billes (4) agencées dans les fenêtres (30) de la cage (3) et dans les couples de chemins de roulement intérieurs (10) et chemins de roulement extérieurs (20), maintenant la cage (4) dans le plan,
le moyeu intérieur (1) étant doté d'une denture intérieure avec un diamètre de référence D_{réf},
le moyeu extérieur (2) ayant un diamètre extérieur Dₑₓₜ,
un nombre de billes Z (4) étant présent,
les billes (4) ayant un diamètre D et
le moyeu intérieur (1) ayant un diamètre de cercle primitif Dₚᵣᵢₘ,
**caractérisé en ce que**
toutes les mesures sont indiquées en millimètres,
les valeurs mesurées Dₚᵣᵢₘ, D et Z fournissent une capacité de charge géométrique CG moyennant la formule suivante : CG = Dₚᵣᵢₘ * D * Z, les valeurs mesurées CG, D_{réf} et Dₑₓₜ fournissant un rapport de résistance de liaison RRL moyennant la formule suivante : RRL = (CG * D_{réf} )/ 100 * Dₑₓₜ * Dₑₓₜ), de manière à obtenir un rapport de résistance de liaison RRL de 3,5 mm² à 5,5 mm²,
les billes (4) présentant un diamètre de 14 à 16 mm environ,
le diamètre extérieur du moyeu extérieur (2) étant 70 à 90 mm environ,
les rainures (50) orientées vers l'extrémité (16) non tournée vers le moyeu extérieur (2) présentant une section avec une diminution progressive de la profondeur,
et
les rainures (50) étant aménagées de sorte que lors du basculement du moyeu intérieur (10) et du moyeu extérieur (2) durant l'assemblage de l'articulation la distance entre la base du chemin d'une rainure (50) et la base (21) du chemin à billes extérieur (20) associé est supérieure ou égale au diamètre d'une bille (4).

2. Articulation selon revendication 1,
**caractérisée en ce que**
les chemins à billes intérieurs (10) sont aménagés de sorte que leur section correspond à un segment de cercle ou d'ellipse de diamètre 7,0 à 8,5 mm.
